# FASCICULE DE BREVET EUROPEEN

(11) **EP 2 583 429 B1**
(45) Date de publication et mention de la délivrance du brevet: **17.01.2018**
(21) Numéro de dépôt: 11723957.4
(22) Date de dépôt: 06.06.2011
(51) Int. Cl.: H04L 29/06, H04L 29/14, H04L 29/08, H04L 12/26

(54) **PROCÉDÉ ET SYSTÈME DE COMMUNICATION BASÉS SUR WS-DISCOVERY**
VERFAHREN UND SYSTEM ZUR KOMMUNIKATION AUF DER BASIS VON WS-DISCOVERY
METHOD AND SYSTEM FOR COMMUNICATION BASED ON WS-DISCOVERY

(30) Priorité: 18.06.2010 FR 1054840
(43) Date de publication de la demande: 24.04.2013
(73) Titulaire: Schneider Electric Industries SAS, 92500 Rueil-Malmaison (FR)
(72) Inventeur: MORAND, Denis, F-06390 Chateauneuf-Villevieille (FR)
(74) Mandataire: Dufresne, Thierry
(86) Numéro de dépôt international: PCT/EP2011/059241
(87) Numéro de publication internationale: WO 2011/157576

(56) Documents cités:
- LI JUNIPER NETWORKS B COLE JUNIPER NETWORKS P MORTON CISCO SYSTEMS D LI CISCO SYSTEMS T: "Cisco Hot Standby Router Protocol (HSRP); rfc2281.txt", IETF STANDARD, INTERNET ENGINEERING TASK FORCE, IETF, CH, 1 mars 1998 (1998-03-01), XP015008065, ISSN: 0000-0003
- NADAS S ET AL: "Virtual Router Redundancy Protocol (VRRP) Version 3 for IPv4 and IPv6; rfc5798.txt", VIRTUAL ROUTER REDUNDANCY PROTOCOL (VRRP) VERSION 3 FOR IPV4 AND IPV6; RFC5798.TXT, INTERNET ENGINEERING TASK FORCE, IETF; STANDARD, INTERNET SOCIETY (ISOC) 4, RUE DES FALAISES CH- 1205 GENEVA, SWITZERLAND, 10 mars 2010 (2010-03-10), pages 1-40, XP015068221,
- "Web Services Dynamic Discovery (WS-Discovery) Version 1.1", OASIS Standard , 1 juillet 2009 (2009-07-01), XP002618883, Extrait de l'Internet: URL:http://docs.oasis-open.org/ws-dd/disco very/1.1/os/wsdd-discovery-1.1-spec-os.pdf [extrait le 2011-01-26] cité dans la demande

## Description

La présente invention se rapporte à un procédé et un système de communication entre un premier serveur et un deuxième serveur, ledit procédé et ledit système étant basés sur l'emploi de la spécification Web Services Dynamic Discovery (WS-Discovery).

Web Services Dynamic Discovery (WS-Discovery) correspond à une spécification technique qui définit un protocole de découverte multicast permettant de localiser des services sur un réseau local IP. Ce type de protocole peut être employé par un poste client pour rechercher un ou plusieurs services sur le réseau local.

II est courant qu'un premier serveur, désigné comme actif pour communiquer avec un ou plusieurs postes clients à travers un réseau, devienne inactif pour différentes raisons. Dans cette situation, il est nécessaire de prévoir un deuxième serveur, dit serveur de secours, capable de devenir le serveur actif lorsque le premier serveur est inactif. Vu d'un poste client, le passage du premier serveur au deuxième serveur doit cependant être transparent.

Le but de l'invention est de proposer un procédé et un système de communication entre un premier serveur dit actif et un deuxième serveur dit de secours permettant de basculer, de manière transparente pour le poste client, du premier serveur au deuxième serveur lorsque le premier serveur devient inactif.

Ce but est atteint par un procédé de communication entre un premier serveur et un deuxième serveur selon la revendication 1, le premier serveur étant désigné comme serveur actif afin de communiquer avec un ou plusieurs postes clients à travers un réseau, ledit procédé étant basé sur l'emploi de messages conformes à la spécification Web Services Dynamic Discovery (WS-Discovery) et caractérisé en ce que les messages sont dotés d'un attribut supplémentaire de redondance qui permet d'élire le deuxième serveur comme serveur actif lorsque le premier serveur n'est plus serveur actif. Le procédé comporte une étape de :
- émission périodique par le premier serveur vers le deuxième serveur d'un message dont l'attribut supplémentaire de redondance comporte un champ signalant que le premier serveur est le serveur actif, et en ce que lorsque le premier serveur n'émet plus le message pendant un intervalle de temps déterminé, le procédé comporte une étape de :
   - émission par le deuxième serveur d'un message dont l'attribut supplémentaire de redondance comporte un champ permettant d'élire un nouveau serveur actif.

Selon une autre particularité, l'étape d'émission est mise en oeuvre par le deuxième serveur à destination d'autres serveurs connectés au réseau.

Selon une autre particularité, le serveur actif comporte une adresse IP connue des postes clients et lorsque le deuxième serveur est élu comme serveur actif, le procédé comporte une étape d'affectation de ladite adresse IP au deuxième serveur.

Selon une autre particularité, le procédé comporte une étape de rétablissement du premier serveur comme serveur actif lorsque celui-ci se reconnecte sur le réseau.

Selon une autre particularité, lorsque le premier serveur devient inactif, le procédé comporte une étape d'émission par le premier serveur d'un message conforme à la spécification Web Services Dynamic Discovery (WS-Discovery) et comportant un attribut supplémentaire avertissant le deuxième serveur qu'il devient inactif.

L'invention concerne également un système de communication selon la revendication 6, destiné à la mise en oeuvre du procédé défini ci-dessus, ledit système comportant un premier serveur et un deuxième serveur, le premier serveur étant désigné comme serveur actif afin de communiquer avec un ou plusieurs postes clients à travers un réseau, le premier serveur et le deuxième serveur communiquant à l'aide de messages conformes à la spécification Web Services Dynamic Discovery (WS-Discovery), caractérisé en ce que les messages sont dotés d'un attribut supplémentaire de redondance qui permet d'élire le deuxième serveur comme serveur actif lorsque le premier serveur n'est plus serveur actif. L'attribut supplémentaire de redondance comporte un champ définissant l'objet du message. L'attribut supplémentaire de redondance comporte un champ comportant l'identifiant du serveur qui envoie le message.

Selon une autre particularité, le serveur actif comporte une adresse IP connue des postes clients et, lorsque le deuxième serveur est élu comme serveur actif, ladite adresse IP est affectée au deuxième serveur.

D'autres caractéristiques et avantages vont apparaître dans la description détaillée qui suit en se référant à un mode de réalisation donné à titre d'exemple et représenté par les dessins annexés sur lesquels :
- la figure 1 représente le système de communication de l'invention à l'état initial,
- la figure 2 représente le système de communication de l'invention dans un état où le serveur actif devient inactif,
- la figure 3 représente le système de communication de l'invention dans lequel un nouveau serveur est élu serveur actif,
- la figure 4 représente l'architecture d'un message conforme à la spécification WS-Discovery, ledit message étant employé dans le procédé et le système de communication de l'invention.

L'invention repose sur l'emploi de la spécification Web Services Dynamic Discovery, habituellement désignée WS-Discovery. Cette spécification est notamment lisible aux adresses suivantes :
http://docs.oasis-open.org/ws-dd/discovery/1.1/cs-01/wsdd-discovery-1.1-spec-cs-01.pdf
http://specs.xmlsoap.org/ws/2005/04/discovery/ws-discovery.pdf

Cette spécification définit un protocole de découverte multicast permettant de localiser des services sur un réseau local IP. Ce type de protocole peut être employé par un poste client pour rechercher sur le réseau local un ou plusieurs services.

L'invention vise à utiliser ce protocole pour mettre en place un service de redondance entre un serveur actif connecté à un ou plusieurs postes clients et un ou plusieurs serveurs de secours. L'invention vise donc à employer le protocole WS-Discovery pour faire de la redondance alors que ce protocole n'est habituellement pas dédié à ce genre de tâche.

Selon l'invention, si le serveur actif est défaillant, un serveur de secours est alors automatiquement élu et devient le serveur actif. Le basculement est automatique et totalement transparent pour les postes clients. Aucune intervention manuelle ou automatique n'est nécessaire sur les postes clients pour effectuer le basculement.

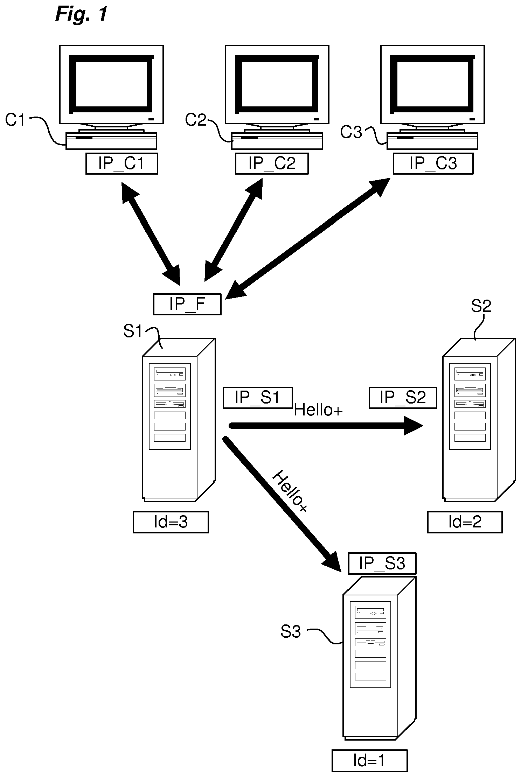

Ainsi, la figure 1 montre un système de communication qui comporte un premier serveur S1 désigné comme serveur actif afin de pouvoir communiquer avec un ou plusieurs postes clients C1, C2, C3 (trois postes clients sur la figure 1) et un ou plusieurs autres serveurs S2, S3, désignés comme serveurs de secours.

Dans la suite de la description, on considère le système qui comporte trois serveurs, dans lesquels le premier serveur S1 est désigné comme actif et le deuxième serveur S2 et le troisième serveur S3 sont désignés comme serveurs de secours du premier serveur S1. Ces trois serveurs S1, S2, S3 forment un ensemble de serveurs redondants.

Au sein de cet ensemble, le premier serveur S1, le deuxième serveur S2 et le troisième serveur S3 communiquent entre eux en employant un protocole basé sur la spécification WS-Discovery. Pour cela, une adresse IP (IP_S1, IP_S2, IP_S3) fixe distincte et inconnue des postes clients C1, C2, C3 est affectée à chacun des serveurs.

Le premier serveur S1 qui est le serveur actif comporte également une adresse IP dite flottante IP_F qui lui est affectée pour communiquer avec les postes clients C1, C2, C3. Le deuxième serveur S2 et le troisième serveur S3 ne comportent pas ce type d'adresse et ne sont donc pas susceptibles de communiquer avec les postes clients C1, C2, C3 tant qu'ils ne sont pas considérés comme serveur actif.

Le procédé de communication employé au sein de l'ensemble de serveurs redondants utilise le protocole conforme à WS-Discovery. Plus précisément, le procédé utilise l'architecture du message désigné *"Hello"* de la spécification WS-Discovery. Ce message *"Hello"* est habituellement envoyé par un serveur aux autres serveurs d'un réseau lorsque que le serveur se connecte sur ce réseau. Grâce à ce message, il informe les autres serveurs qu'il vient de se connecter.

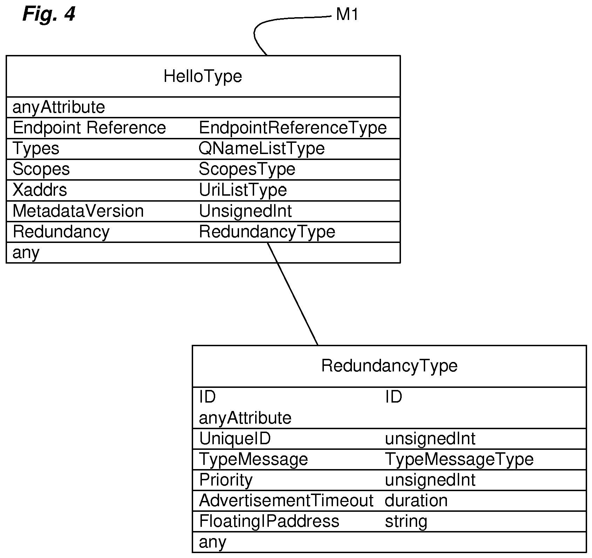

En référence à la figure 4, l'architecture du message *"Hello"* comporte les attributs *"anyAttribute"* et *"any"* permettant de lui rajouter des attributs supplémentaires permettant de l'employer pour d'autres applications. Ainsi l'invention consiste notamment à ajouter au message *"Hello"* classique un attribut supplémentaire permettant d'effectuer la redondance entre les serveurs de l'ensemble redondant de manière à créer un message *"Hello+" (M1,* *figure 4**).* Des messages de type *"Hello+"* seront ainsi échangés entre les serveurs S1, S2, S3 de l'ensemble redondant pour gérer la redondance et conserver en permanence un serveur actif vu des postes clients C1, C2, C3. Cet ajout d'attribut permet de ne pas perturber les communications basées sur WS-Discovery classique. Les messages *"Hello+"* échangés entre les serveurs pourront donc tout à fait cohabiter avec des messages "Hello"classiques.

L'attribut supplémentaire est désigné *"Redundancy"* et permet donc d'utiliser le message *"Hello+"* doté de cet attribut pour effectuer la redondance entre les serveurs.

Cet attribut *"Redundancy"* comporte les champs suivants :
- *"UniqueID"* : Ce champ permet au serveur de s'identifier sur le réseau lors de l'envoi du message *"Hello+".* Ce champ est rempli par l'identifiant unique du serveur émetteur lors de l'envoi d'un message *"Hello+".* L*"'UniqueID"* est généré une seule fois lors du démarrage du serveur. Cet *"UniqueID"* peut être par exemple un UUID tel que défini dans la norme ISO/IEC 9834-8:2008.
- *"TypeMessage"* : Lors de l'envoi d'un message *"Hello+",* ce champ correspond à l'objet du message envoyé. II peut prendre trois valeurs distinctes qui sont :
   - *"JOINING",* envoyé par un serveur lorsqu'il se connecte sur le réseau,
   - *"ADVERTISEMENT"* envoyé périodiquement par le serveur actif aux serveurs de secours pour informer les serveurs de secours qu'il est actif,
   - *"ELECTION"* envoyé par un ou plusieurs autres serveurs de secours aux autres serveurs connectés afin de lancer une élection d'un nouveau serveur actif.
- *"Priority"* : Lors de l'envoi d'un message *"Hello+"*, ce champ permet de forcer un serveur de secours à être élu.
- *"AdvertisementTimeout" :* Période d'émission des messages *"Hello+"* par le serveur actif et qui lorsqu'elle est dépassée permet de détecter la disparition du serveur actif.
- *"FloatingIPaddress"* : Ce champ correspond à l'adresse IP flottante IP_F affectée au serveur actif.

Lors de l'envoi d'un message *"Hello+"* par l'un des serveurs de l'ensemble redondant, ce message doit comporter au moins les champs *"UniqueID"* permettant d'identifier le serveur qui a envoyé le message et le champ *"TypeMessage"* indiquant l'objet du message qui peut correspondre à *"JOINING", "ADVERTISEMENT"* ou *"ELECTION".*

Les autres champs, c'est-à-dire *"Priority", "AdvertisementTimeout", "FloatingIPaddress"* sont optionnels lors de l'envoi d'un message *"Hello+".* En effet la durée prévue par *"AdvertisementTimeout"* peut être prédéfinie ou enregistrée après avoir été reçue par message et l'adresse IP flottante peut être préenregistrée dans les serveurs ou enregistrée après avoir été reçue par message.

Chaque serveur possède le même algorithme de fonctionnement qui comporte les instructions définies ci-dessous. Pour un serveur i désigné S_i, l'algorithme est ainsi le suivant :
1) Par défaut, aucun serveur n'est "Serveur Actif", passage en phase 2).
2) Lors du démarrage du serveur, le serveur S_i génère son *"UniqueID=Idi",* passage en phase 3).
3) Un serveur S_i qui n'est pas serveur actif émet un message *"Hello+* - *Type JOINING - UniqueID=Idi"* s'il se connecte pour la première fois sur le réseau, passage en phase 4).
4) Si le serveur S_i reçoit un message *"Hello+ - Type=ADVERTISEMENT - UniqueID=IDj",* le travail du serveur S_i est terminé, il sauvegarde la valeur du champ *"UniqueID"* reçue. Tant qu'il reçoit ce type de message dans l'intervalle de temps défini par le champ *"AdvertisementTimeout",* le serveur S_i reste en attente et en phase 4). Sinon il va en phase 5).
5) S'il ne reçoit plus le message *"Hello+ - Type=ADVERTISEMENT - UniqueID=IDj"* dans l'intervalle de temps défini par le champ *"AdvertisementTimeout",* il envoie un message *"Hello+* - *Type=ELECTION - UniqueID=Idi".* S'il reçoit un message *"Hello+ - Type=ELECTION"* avec un *"UniqueID"* dont la valeur est supérieure à la valeur de son *"UniqueID",* passage en phase 3. Sinon passage en phase 6) après avoir attendu que tous les autres serveurs aient eu la possibilité d'envoyer un message *"Hello+ - Type=ELECTION"* avec leur *"UniqueID".* La durée de l'attente peut-être fixée au préalable, programmée ou reçue par message.
6) Le serveur S_i présente un *"Unique*_*ID"* dont la valeur est la plus élevée par rapport à celle de tous les autres serveurs de l'ensemble redondant. Le serveur S_i devient donc serveur actif. Passage en phase 7).
7) Affectation de l'adresse IP flottante et émission d'une requête dénommée *"ARP Gratuitous"* permettant de diffuser la correspondance entre son adresse MAC et l'adresse IP flottante aux autres serveurs connectés.

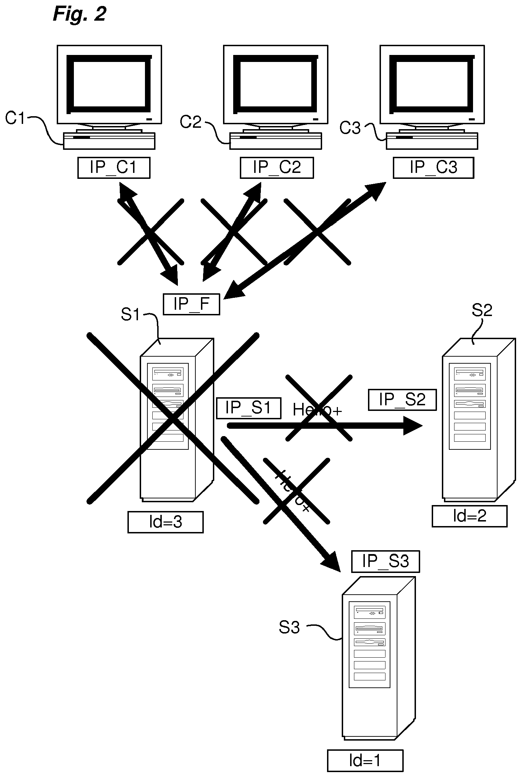

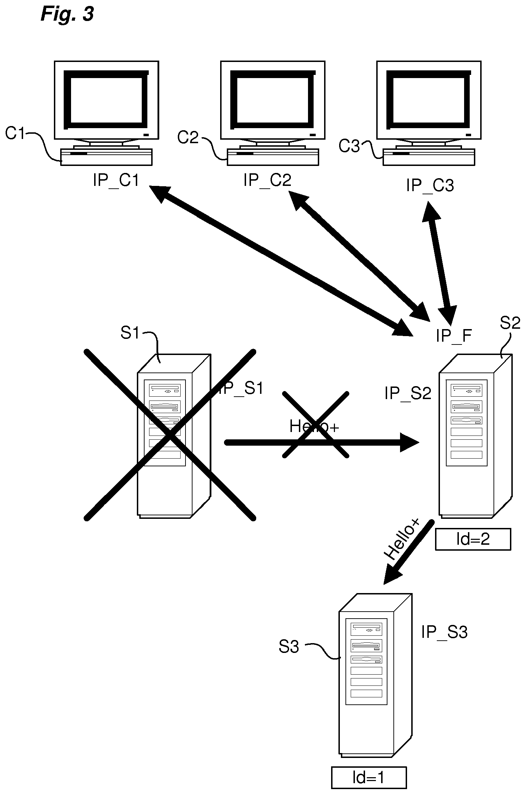

En application de l'algorithme détaillé ci-dessus et en référence aux figures 1 à 3, l'invention fonctionne donc de la manière suivante :
- Le premier serveur S1 est serveur actif et est le seul à pouvoir communiquer avec les postes clients C1, C2, C3 (figure 1). II est localisé sur le réseau par l'adresse IP flottante IP_F connue des postes clients C1, C2, C3. En compagnie du premier serveur S1, le deuxième serveur S2 et le troisième serveur S3 font partie de l'ensemble redondant. Pour cela, lorsqu'ils se sont connectés au réseau, ils ont envoyé un message *"Hello+ - Type=JOINING"* indiquant qu'ils souhaitaient faire partie de l'ensemble redondant.
- Le premier serveur S1 qui est serveur actif émet périodiquement un message *"Hello+ - Type=ADVERTISEMENT"* à destination du deuxième serveur S2 et du troisième serveur S3 afin de les informer qu'il est toujours actif.
- Le premier serveur S1 présente un dysfonctionnement qui le rend inactif. Le deuxième serveur S2 et/ou le troisième serveur S3 ne reçoivent donc plus le message *"Hello+ - Type=ADVERTISEMENT"* (figure 2). Si la durée spécifiée dans le champ *"AdvertisementTimeout"* est par exemple dépassée pour le deuxième serveur S2, celui-ci envoie au troisième serveur S3 un message *"Hello+ Type=ELECTION"* avec la valeur de son *"UniqueID".* Le troisième serveur S3 envoie également au deuxième serveur S2 un message *"Hello+ - Type=ELECTION"* avec la valeur de son *"UniqueID".*
- La valeur de I'*"UniqueID"* du deuxième serveur S2 est plus élevée que la valeur de I'*"UniqueID"* du troisième serveur S3. Le deuxième serveur S2 est donc élu serveur actif.
- Le deuxième serveur S2 s'affecte l'adresse IP flottante de manière à pouvoir communiquer avec les postes clients C1, C2, C3 (figure 3). II envoie également une requête *"ARP Gratuitous"* à destination du troisième serveur S3 afin de lui donner la correspondance entre son adresse IP flottante et l'adresse MAC.
- II émet ensuite périodiquement à destination du troisième serveur S3 un message *"Hello+ Type=ADVERTISEMENT"* afin de l'informer qu'il est serveur actif.

Selon l'invention, une variante de réalisation peut consister à rétablir le premier serveur S1 automatiquement comme serveur actif lorsque celui-ci n'est plus défaillant et revient sur le réseau.

Une autre variante de réalisation peut consister en l'envoi d'un message par le serveur actif aux autres serveurs lorsque le serveur actif devient inactif et quitte le réseau. II est par exemple possible d'employer le message *"Bye"* conforme à la spécification WS-Discovery et à le faire évoluer pour remplir cette fonctionnalité. La mise en place de l'élection du nouveau serveur actif sera donc plus rapide entre les serveurs de secours.

II est bien entendu que l'on peut, sans sortir du cadre de l'invention, imaginer d'autres variantes et perfectionnements de détail et de même envisager l'emploi de moyens équivalents.

## Revendications

1. Procédé de communication entre un premier serveur (S1) et un deuxième serveur (S2), le premier serveur (S1) étant désigné comme serveur actif afin de communiquer avec un ou plusieurs postes clients (C1, C2, C3) à travers un réseau, ledit procédé étant basé sur l'emploi de messages conformes à la spécification Web Services Dynamic Discovery (WS-Discovery) et **caractérisé en ce que** les messages sont dotés d'un attribut supplémentaire de redondance qui permet d'élire le deuxième serveur (S2) comme serveur actif lorsque le premier serveur (S1) n'est plus serveur actif, ledit attribut supplémentaire de redondance d'un message comportant au moins les champs suivants:
- *"UniqueID"* qui permet à un serveur de s'identifier sur le réseau lors de l'envoi dudit message,
- *"TypeMessage"* qui correspond à l'objet du message envoyé et qui peut prendre trois valeurs distinctes qui sont :
∘ *"JOINING",* envoyé par un serveur lorsqu'il se connecte sur le réseau,
∘ *"ADVERTISEMENT"* envoyé périodiquement par le serveur actif aux serveurs de secours pour informer les serveurs de secours qu'il est actif,
∘ *"ELECTION"* envoyé par un ou plusieurs autres serveurs de secours aux autres serveurs connectés afin de lancer une élection d'un nouveau serveur actif,
- *"AdvertisementTimeout"qui* correspond à la période d'émission des messages par le serveur actif et qui lorsqu'elle est dépassée permet de détecter la disparition du serveur actif,
- "*FloatingIPaddress*" qui correspond à une adresse IP flottante affectée au serveur actif.
et **en ce qu'**il comporte une étape de :
- émission périodique par le premier serveur (S1) vers le deuxième serveur (S2) d'un message dont l'attribut supplémentaire de redondance comporte ledit champ *"ADVERTISEMENT"* signalant que le premier serveur (S1) est le serveur actif, et **en ce que** lorsque le premier serveur (S1) n'émet plus ce message après la période définie par le champ *"AdvertisementTimeout",* le procédé comporte une étape de :
- émission par le deuxième serveur (S2) d'un message dont l'attribut supplémentaire de redondance comporte ledit champ *"ELECTION"* permettant d'élire un nouveau serveur actif.

2. Procédé selon la revendication 1, **caractérisé en ce que** l'étape d'émission mise en oeuvre par le deuxième serveur (S2) est réalisée à destination d'autres serveurs connectés au réseau.

3. Procédé selon l'une des revendications 1 à 2, **caractérisé en ce que** le serveur actif comporte une adresse IP connue des postes clients (C1, C2, C3) et **en ce que** lorsque le deuxième serveur (S2) est élu comme serveur actif, le procédé comporte une étape d'affectation de ladite adresse IP au deuxième serveur (S2).

4. Procédé selon l'une des revendications 1 à 3, **caractérisé en ce qu'**il comporte une étape de rétablissement du premier serveur (S1) comme serveur actif lorsque celui-ci se reconnecte sur le réseau.

5. Procédé selon l'une des revendications 1 à 4, **caractérisé en ce que** lorsque le premier serveur devient inactif, le procédé comporte une étape d'émission par le premier serveur d'un message conforme à la spécification Web Services Dynamic Discovery (WS-Discovery) et comportant un attribut supplémentaire avertissant le deuxième serveur qu'il devient inactif.

6. Système de communication destiné à la mise en oeuvre du procédé défini dans l'une des revendications 1 à 5 et comportant un premier serveur (S1) et un deuxième serveur (S2), le premier serveur (S1) étant désigné comme serveur actif afin de communiquer avec un ou plusieurs postes clients (C1, C2, C3) à travers un réseau, le premier serveur et le deuxième serveur communiquant à l'aide de messages conformes à la spécification Web Services Dynamic Discovery (WS-Discovery), les messages étant dotés d'un attribut supplémentaire de redondance qui permet d'élire le deuxième serveur (S2) comme serveur actif lorsque le premier serveur (S1) n'est plus serveur actif.

7. Système selon la revendication 6, **caractérisé en ce que** l'attribut supplémentaire de redondance comporte un champ définissant l'objet du message.

8. Système selon la revendication 6 ou 7, **caractérisé en ce que** l'attribut supplémentaire de redondance comporte un champ comportant l'identifiant du serveur qui envoie le message.

9. Système selon l'une des revendications 6 à 8, **caractérisé en ce que** le serveur actif comporte une adresse IP connue des postes clients (C1, C2, C3) et **en ce que** lorsque le deuxième serveur (S2) est élu comme serveur actif, ladite adresse IP est affectée au deuxième serveur (S2).

## Patentansprüche

1. Kommunikationsverfahren zwischen einem ersten Server (S1) und einem zweiten Server (S2), wobei der erste Server (S1) als aktiver Server bestimmt wird, um mit einer oder mehreren Client-Stationen (C1, C2, C3) über ein Netz zu kommunizieren, wobei das Verfahren auf der Verwendung von Nachrichten entsprechend der Spezifikation Web Services Dynamic Discovery (WS-Discovery) basiert und **dadurch gekennzeichnet ist, dass** die Nachrichten mit einem zusätzlichen Redundanz-Attribut versehen sind, das es ermöglicht, den zweiten Server (S2) als aktiven Server zu wählen, wenn der erste Server (S1) nicht mehr aktiver Server ist, wobei das zusätzliche Redundanz-Attribut einer Nachricht mindestens die folgenden Felder aufweist:
- *"UniqueID",* das einem Server erlaubt, sich beim Senden der Nachricht im Netz anzumelden,
- *"TypeMessage",* das dem Objekt der gesendeten Nachricht entspricht und drei verschiedene Werte annehmen kann, die sind:
∘ "JOINING", gesendet von einem Server, wenn er sich in das Netz einloggt,
∘ *"ADVERTISEMENT",* periodisch vom aktiven Server an die Backup-Server gesendet, um die Backup-Server darüber zu informieren, dass er aktiv ist,
∘ *"ELECTION",* von einem oder mehreren anderen Backup-Servern an die anderen eingeloggten Server gesendet, um eine Wahl eines neuen aktiven Servers zu starten,
- *"AdvertisementTimeout"*, das der Sendeperiode der Nachrichten durch den aktiven Server entspricht und das, wenn es überschritten ist, es ermöglicht, das Verschwinden des aktiven Servers zu erfassen,
- *"FloatingIPaddress",* das einer dem aktiven Server zugeteilten symbolischen IP-Adresse entspricht,
und dass es einen Schritt aufweist des:
- periodischen Sendens vom ersten Server (S1) zum zweiten Server (S2) einer Nachricht, deren zusätzliches Redundanz-Attribut das Feld "*ADVERTISEMENT"* aufweist, das anzeigt, dass der erste Server (S1) der aktive Server ist, und dass, wenn der erste Server (S1) diese Nachricht nach der vom Feld *"AdvertisementTimeout"* definierten Periode nicht mehr sendet, das Verfahren einen Schritt aufweist des:
- Sendens durch den zweiten Server (S2) einer Nachricht, deren zusätzliches Redundanz-Attribut das Feld *"ELECTION"* aufweist, das es ermöglicht, einen neuen aktiven Server zu wählen.

2. Verfahren nach Anspruch 1, **dadurch gekennzeichnet, dass** der vom zweiten Server (S2) durchgeführte Sendeschritt an die Adresse anderer in das Netz eingeloggten Server ausgeführt wird.

3. Verfahren nach einem der Ansprüche 1 bis 2, **dadurch gekennzeichnet, dass** der aktive Server eine bekannte IP-Adresse der Client-Stationen (C1, C2, C3) aufweist, und dass, wenn der zweite Server (S2) als aktiver Server gewählt wird, das Verfahren einen Schritt der Zuteilung der IP-Adresse zum zweiten Server (S2) aufweist.

4. Verfahren nach einem der Ansprüche 1 bis 3, **dadurch gekennzeichnet, dass** es einen Schritt der Wiedereinführung des ersten Servers (S1) als aktiver Server aufweist, wenn dieser sich wieder in das Netz einloggt.

5. Verfahren nach einem der Ansprüche 1 bis 4, **dadurch gekennzeichnet, dass**, wenn der erste Server inaktiv wird, das Verfahren einen Schritt des Sendens einer Nachricht durch den ersten Server aufweist, die der Spezifikation Web Services Dynamic Discovery (WS-Discovery) entspricht und ein zusätzliches Attribut aufweist, das den zweiten Server darüber benachrichtigt, dass er inaktiv wird.

6. Kommunikationssystem, das zur Durchführung des in einem der Ansprüche 1 bis 5 definierten Verfahrens bestimmt ist und einen ersten Server (S1) und einen zweiten Server (S2) aufweist, wobei der erste Server (S1) als aktiver Server bestimmt wird, um über ein Netz mit einer oder mehreren Client-Stationen (C1, C2, C3) zu kommunizieren, wobei der erste Server und der zweite Server mit Hilfe von Nachrichten entsprechend der Spezifikation Web Services Dynamic Discovery (WS-Discovery) kommunizieren,
wobei die Nachrichten mit einem zusätzlichen Redundanz-Attribut versehen sind, das es ermöglicht, den zweiten Server (S2) als aktiver Server zu wählen, wenn der erste Server (S1) nicht mehr aktiver Server ist.

7. System nach Anspruch 6, **dadurch gekennzeichnet, dass** das zusätzliche Redundanz-Attribut ein das Objekt der Nachricht definierendes Feld aufweist.

8. System nach Anspruch 6 oder 7, **dadurch gekennzeichnet, dass** das zusätzliche Redundanz-Attribut ein die Kennung des die Nachricht sendenden Servers aufweisendes Feld aufweist.

9. System nach einem der Ansprüche 6 bis 8, **dadurch gekennzeichnet, dass** der aktive Server eine bekannte IP-Adresse der Client-Stationen (C1, C2, C3) aufweist, und dass, wenn der zweite Server (S2) als aktiver Server gewählt wird, die IP-Adresse dem zweiten Server (S2) zugeteilt wird.

## Claims

1. Method for communication between a first server (S1) and a second server (S2), the first server (S1) being designated as the active server for the purpose of communicating with one or more client stations (C1, C2, C3) through a network, said method being based on the use of messages that are in accordance with the Web Services Dynamic Discovery (WS-Discovery) specification and **characterized in that** the messages are provided with an additional redundancy attribute that allows them to elect the second server (S2) as the active server when the first server (S1) is no longer the active server, said additional redundancy attribute of a message including at least the following fields:
- *"UniqueID",* which allows a server to be identified on the network when sending said message;
- *"TypeMessage",* which corresponds to the subject of the sent message and which may take three distinct values, which are:
∘ *"JOINING",* sent by a server when it connects to the network;
∘ *"ADVERTISEMENT',* sent periodically by the active server to the backup servers in order to inform the backup servers that it is active;
∘ *"ELECTION",* sent by one or more other backup servers to the other connected servers in order to initiate an election of a new active server;
- "*AdvertisementTimeout*"*,* which corresponds to the time taken by the active server to transmit messages and which, when it is exceeded, allows the disappearance of the active server to be detected;
- "*FloatingIPaddress*"*,* which corresponds to a floating IP address assigned to the active server.
and **in that** it includes a step of:
- periodically transmitting, by the first server (S1) to the second server (S2), a message, the additional redundancy attribute of which includes said *"ADVERTISEMENT'* field indicating that the first server (S1) is the active server, and **in that**, when the first server (S1) no longer transmits this message after the time defined by the *"AdvertisementTimeout"* field, the method includes a step of:
- transmitting, by the second server (S2), a message, the additional redundancy attribute of which includes said *"ELECTION"* field allowing a new active server to be elected.

2. Method according to Claim 1, **characterized in that** said the transmission step implemented by the second server (S2) is carried out with other servers connected to the network as the destination.

3. Method according to either of Claims 1 and 2, **characterized in that** the active server includes an IP address that is known to the client stations (C1, C2, C3) and **in that**, when the second server (S2) is elected as the active server, the method includes a step of assigning said IP address to the second server (S2).

4. Method according to one of Claims 1 to 3, **characterized in that** it includes a step of re-establishing the first server (S1) as the active server when the former is reconnected to the network.

5. Method according to one of Claims 1 to 4, **characterized in that**, when the first server falls inactive, the method includes a step of transmitting, by the first server, a message that is in accordance with the Web Services Dynamic Discovery (WS-Discovery) specification and that includes an additional attribute alerting the second server that it is falling inactive.

6. Communication system designed to implement the method defined in one of Claims 1 to 5 and including a first server (S1) and a second server (S2), the first server (S1) being designated as the active server for the purpose of communicating with one or more client stations (C1, C2, C3) through a network, the first server and the second server communicating using messages that are in accordance with the Web Services Dynamic Discovery (WS-Discovery) specification, the messages being provided with an additional redundancy attribute that allows them to elect the second server (S2) as the active server when the first server (S1) is no longer the active server.

7. System according to Claim 6, **characterized in that** the additional redundancy attribute includes a field defining the subject of the message.

8. System according to Claim 6 or 7, **characterized in that** the additional redundancy attribute includes a field including the identifier of the server that sends the message.

9. System according to one of Claims 6 to 8, **characterized in that** the active server includes an IP address that is known to the client stations (C1, C2, C3) and **in that**, when the second server (S2) is elected as the active server, said IP address is assigned to the second server (S2).
